# FASCICULE DE BREVET EUROPEEN

(11) **EP 0 403 317 B1**
(45) Date de publication et mention de la délivrance du brevet: **12.01.1994**
(21) Numéro de dépôt: 90401155.8
(22) Date de dépôt: 27.04.1990
(51) Int. Cl.: H02K 3/50, H02K 3/34, H02K 5/22, H02K 5/128

(54) **Stator de moteur électrique**
Ständer eines elektrischen Motors
Electric motor stator

(30) Priorité: 16.06.1989 FR 8908012
(43) Date de publication de la demande: 19.12.1990
(73) Titulaire: POMPES SALMSON Société Anonyme à directoire dite:, 92504 Rueil Malmaison (FR)
(72) Inventeur: Trian, Hervé, F-53260 Parne sur Roc (FR)
(74) Mandataire: Hirsch, Marc-Roger

(56) Documents cités:
- DE-A- 2 822 831
- FR-A- 2 087 127
- FR-A- 2 153 025
- GB-A- 574 491
- US-A- 3 867 658

## Description

La présente invention se rapporte à stator de moteur électrique à induction comportant un paquet de tôles magnétiques empilées, muni d'encoches ouvertes latéralement et destinées à recevoir les parties actives sensiblement rectilignes des spires du bobinage des pôles du moteur, la surface intérieure des encoches étant recouverte d'une couche en matériau électriquement isolant surmoulée monobloc sur la surface intérieure d'isolation des encoches et sur les autres surfaces du circuit magnétique de stator, à l'exception, le cas échéant, de la zone d'entrefer et des pieds de dent, pour assurer l'isolation à la masse de la zone des encoches et la cohésion du paquet de tôles, la couche monobloc surmoulée comportant sur chaque face d'extrémité du stator un manchon cylindrique allongé, en saillie axiale vers l'extérieur et concentrique à l'entrefer.

Les stators des moteurs électriques de faible et moyenne puissance comportent des encoches dans lesquelles on introduit, par une fente relativement mince ménagée entre deux circuits magnétiques de dents, les fils des bobinages des pôles du moteur. Entre deux fils de bobinage voisins il n'existe, en général, qu'une faible différence de tension, généralement inférieure à 1 volt pour les moteurs électriques de faible puissance fonctionnant sur le réseau 220/380 volts entre phases et une simple isolation à la laque suffit à assurer l'isolation entre spires. L'isolation à la masse au fond de l'encoche doit, par contre, résister non seulement à la tension nominale du réseau, mais aussi aux surtensions de manoeuvre ou d'origine atmosphérique qui peuvent se développer sur le réseau et le fond de l'encoche doit, pour cela, être recouvert d'une feuille d'isolant, ce qui nécessite souvent une mise en place onéreuse.

La question du remplacement de l'isolant de fond d'encoche par un processus économique d'isolation de l'encoche s'est posée mais n'avait pas, jusqu'à maintenant, pu être résolue de façon fiable sur le plan électrique pour les moteurs tels que ceux des pompes de circulation d'eau chaude, notamment d'eau de chauffage, qui doivent fonctionner pendant de très longues durées sans défaillance, en étant alimentées par un réseau quelconque triphasé ou monophasé qui reçoit exceptionnellement de fortes impulsions de surtension à front raide d'origine atmosphérique, pouvant par exemple atteindre dix fois la tension du réseau en monophasé (soit 2 200 volts pour le réseau monophasé à 220 volts).

Le document FR-A-2 153 025 décrit une machine dynamoélectrique comportant des moyens d'isolation moulés in situ sur le circuit magnétique du stator de la machine et qui recouvrent au moins les surfaces des encoches servant à loger les spires d'enroulement. Les moyens d'isolation moulés in-situ comprennent au moins un organe de retenue faisant saillie d'une surface d'extrémité du circuit magnétique pour limiter le déplacement des spires d'enroulement. Une masse interstitielle de matériau particulaire aggloméré par une matrice pratiquement solide et rigide de matière diélectrique est disposée autour d'au moins une partie des spires d'enroulement, les moyens moulés in situ et la masse interstitielle formant un système d'isolation électrique et de protection matérielle pour ces spires d'enroulement. Le corps moulé d'isolation est de préférence formé in situ sur le circuit magnétique selon la technique décrite dans FR-A-2 118 184, c'est-à-dire en plaçant l'empilement de tôles magnétiques sous une pression déterminée par des moyens de serrage et en injectant une résine polyamide non durcie dans une cavité de moulage fermée contenant le circuit magnétique.

Par ailleurs, DE-A-2 822 831 décrit un stator de moteur électrique dont le paquet de tôles est maintenu serré par une cage en matière plastique injectée ou moulée (surmoulée) directement sur le paquet de tôles. Des barreaux de liaison axiale des faces frontales du paquet de tôles et de serrage de ce paquet de tôles peuvent constituer un revêtement de paroi du fond des encoches destinées à recevoir le bobinage.

La présente invention a notamment pour but de résoudre le problème de la réalisation de l'isolation des encoches à une prix compétitif et de façon fiable dans le long terme tout en utilisant au mieux la tôle d'un circuit magnétique de moteur et en permettant d'y loger un volume maximal de barres ou de fils de cuivre. Pour cela, l'isolation des fonds d'encoches doit être la plus mince possible tout en conservant une isolation suffisante à la masse pour résister aux surtensions mentionnées ci-dessus. La réalisation d'une isolation surmoulée monobloc selon les enseignements des documents de l'état de la technique a montré que le serrage de l'empilage de tôles réalisé par la couche monobloc surmoulée est déficient en service, en particulier dans la zone des dents et surtout des épanouissements de pieds de dent qui vibrent de façon particulièrement gênante, notamment au cours des phases de marche à vide des pompes.

Un objet de la présente invention consiste notamment à proposer un stator de moteur électrique à induction dont l'isolation des fonds d'encoches est surmoulée sur le circuit magnétique et qui utilise une isolation de fond d'encoche mince tout en supprimant les vibrations parasites d'origine magnétique qui se sont manifestées sur les stators à isolation surmoulée du circuit magnétique qui sont réalisés selon l'état de la technique.

A cet effet, selon l'invention, la couche monobloc surmoulée présente une épaisseur nettement plus faible dans la zone de la surface intérieure des encoches et, le cas échéant, de l'entrefer que dans la zone des faces d'extrémité du stator où elle sert de support radial rigide, nervuré le cas échéant, du manchon disposé à l'extérieur des têtes de bobines et de plus forte épaisseur que ladite zone des encoches, et les têtes ou chignons des bobines sont logées à l'intérieur du manchon correspondant prévu à chaque extrémité du stator et sont reliées rigidement à ce manchon par un moyen d'enrobage résistant mécaniquement, par exemple par cuisson ou polymérisation d'un enduit collant, pour former, de chaque côté du stator, un bloc annulaire rigide et isolé électriquement, qui contient les têtes des bobines constituant elle-mêmes une sorte d'armature métallique pour l'ensemble en matériau électriquement isolant surmoulé, de manière à simultanément protéger mécaniquement les têtes de bobine par le manchon de chaque côté du stator et à renforcer la rigidité mécanique d'ensemble de la couche isolante de faible épaisseur à l'intérieur des encoches. Le matériau isolant de la couche monobloc est en général constitué par une matière moulable, par exemple une résine polyester prévue pour assurer l'isolation à la masse du circuit magnétique à une température élevée.

La couche isolante monobloc recouvre, à chaque extrémité du stator, au moins une partie de la surface latérale du circuit magnétique d'encoche faisant face à l'entrefer. La couche monobloc surmoulée peut former une carcasse qui entoure au moins partiellement la culasse du circuit magnétique sur laquelle elle est surmoulée et qui porte de façon monobloc la partie inférieure d'au moins une boîte à bornes électrique.

Lorsque, la couche monobloc surmoulée recouvre, à chaque extrémité du stator, la totalité de la section magnétique d'encoche et la zone d'entrefer du stator, de manière à encapsuler complètement la zone des encoches et de l'entrefer du circuit magnétique du stator et que le circuit magnétique selon l'invention est appliqué à un moteur à rotor isolé de façon étanche par un tube d'entrefer en un matériau non magnétique, le tube d'entrefer isolant de façon étanche le rotor du moteur vis-à-vis de l'extérieur est appliqué directement au contact de la couche isolante d'entrefer faisant partie de ladite couche monobloc surmoulée et qui isole ainsi physiquement et électriquement ledit tube du contact avec les tôles du circuit magnétique.

D'autres buts, avantages et caractéristiques apparaîtront à la lecture de la description de divers modes de réalisation de l'invention, faite à titre non limitatif et en regard du dessin annexé dans lequel:
- - la figure 1: est une vue en coupe transversale diamétrale (voir les demi-plans de coupe 2a-2a et 2b-2b à la figure 2) d'un circuit magnétique de stator de moteur électrique selon l'invention, en représentant deux modes de réalisation du stator avec une isolation d'encoche intégrée (mode a en haut, mode b en bas);
- - la figure 2: représente en vue fragmentaire, à plus grande échelle et vues en bout, trois encoches du moteur électrique représenté en coupe en bas de la figure 1;
- - la figure 3: représente en coupe transversale et également à plus grande échelle une partie de stator et une partie de rotor d'un moteur électrique à tube d'entrefer comportant un circuit magnétique selon l'invention.
- la figure 4: est une vue analogue à celle de la figure 1 d'un stator de moteur électrique à induction, après réalisation de l'enrobage des têtes de bobine dans deux blocs annulaires rigides.

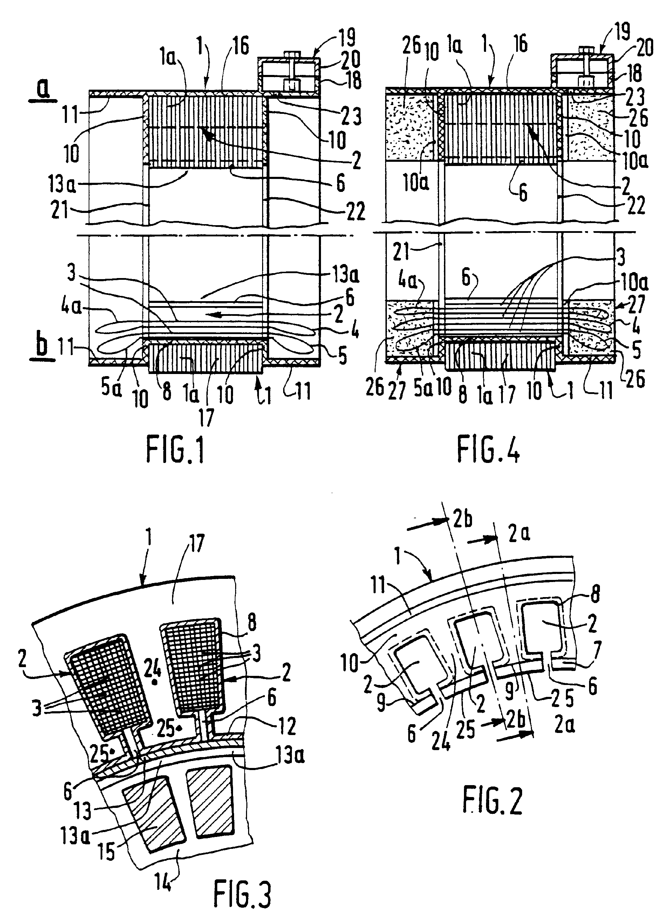

Si l'on se reporte à la figure 1, le circuit magnétique stator 1 d'un moteur électrique à induction (c'est-à-dire à courant alternatif et à vitesse normale proche de la vitesse de synchronisme sur la fréquence) est constitué d'un empilement de tôles minces la de qualité magnétique (à faible perte par hystérésis), par exemple d'épaisseur 0,4 mm. Ces tôles ne sont en général pas revêtues d'un isolant mais emprisonnent entre elles à leur empilage une mince lame d'air qui suffit pour réaliser un certain isolement électrique d'interruption des courants de Foucault limitant sensiblement les pertes de puissance à celles dues à la magnétisation alternative du circuit. Les tôles magnétiques empilées forment des encoches 2 que l'on voit mieux sur les figures 2 et 3 et qui sont destinées à recevoir les parties actives sensiblement rectilignes 3 (voir les spires ou bobines schématiques 4 et 5 représentées au bas de la figure 1) des bobinages qui sont introduits à travers la fente d'encoche 6. Les intervalles de fer subsistant entre les encoches 2 constituent le circuit magnétique d'encoche 24 qui présente, en général, une largeur constante et un épanouissement de pied 25 débouchant sur l'entrefer pour réduire l'induction maximale régnant dans l'entrefer.

Pour réaliser l'isolation des encoches selon un mode de réalisation de l'invention, le paquet de tôles empilées 1 est maintenu serré axialement, par exemple à l'aide de mors à distribution radiale agissant sur la zone 7 des pieds de dents (voir la figure 2) et une couche d'isolation 8 en un matériau isolant électrique est injectée en surmoulage sur le fond des encoches et jusqu'au voisinage des pieds de dents (voir la ligne limite 9 correspondant sensiblement à la limite des mors à répartition radiale).

Comme matériau isolant facile à injecter, on peut dans certaines applications à faible échauffement, utiliser le polyéthylène, mais pour les moteurs électriques performants (classe F), tels que ceux entraînant des pompes de circulateurs de chauffage central, on utilisera de préférence un matériau moulable résistant à des températures élevées de l'ordre de 200°C, régnant à la surface du fer ou du cuivre des bobinages et qui est moulé sur une épaisseur d'environ 0,5 mm lui permettant de résister à des surtensions d'environ 2 000 volts. La couche injectée à l'intérieur d'une encoche forme, sur celle-ci, un tube isolant ouvert latéralement sur l'extérieur par la fente 6 de l'ouverture d'encoche et apte à isoler parfaitement le ou les faisceau(x) de fils de bobinage reçu(s) dans cette encoche, par rapport à la masse métallique du rotor.

L'ensemble des tubes isolants qui n'a pas de tenue axiale autre que la friction de contact sur le fond d'encoche est relié de chaque côté 21 ou 22 du stator 1 par une couche latérale isolante formant une bague isolante 10 pontant deux encoches voisines, de manière à réaliser un réseau de tirants parallèles maintenant en compression axiale l'ensemble des tôles magnétiques la. La couche monobloc 8 surmoulée sur la zone des encoches se révèle très peu encombrante, comparativement aux isolations d'encoches rapportées et elle remplit non seulement une fonction d'isolation mais aussi une fonction de maintien de l'homogénéité du paquet de tôles du circuit magnétique et d'amélioration de son comportement aux vibrations.

Selon un mode de réalisation particulièrement avantageux de la couche monobloc surmoulée, celle-ci comporte à chaque extrémité 21, 22 du stator un manchon 11 en saillie axiale vers l'extérieur et en forme de manchon cylindrique allongé concentrique à l'entrefer. Ce manchon 11 présente en général une épaisseur nettement plus importante que celle de la couche isolante à fond d'encoche, par exemple de l'ordre de 1 mm au lieu de 0,5 mm pour la couche de fond d'encoche. Comme on le voit au bas de la figure 1, le manchon 11 sert à protéger les têtes ou chignons de bobine 4a et 5a. Il peut aussi servir à les soutenir pour empêcher leur déformation sous l'effet des courants de crête, les têtes de bobine étant adhérisées sur le manchon 11 par un enduit collant et un vernis à polymériser.

Selon le mode de réalisation de stator de moteur électrique représenté à la figure 4, on voit que les bagues isolantes latérales 10 qui présentent en général une épaisseur nettement plus importante que celle de la couche isolante à fond d'encoche (par exemple 2 à 3 mm au lieu de 0,5 mm) sont encore renforcées et rigidifiées par des nervures radiales 10a, de manière à servir d'appui radial rigide pour le manchon allongé 11 qui abrite et protège les têtes des bobines 4, 5. Dans le mode de réalisation représenté à la figure 4, les têtes de bobines 4a, 5a représentées schématiquement uniquement à la partie inférieure de la figure correspondant au plan de coupe 2b à la figure 2, sont enrobées dans un enduit collant 26 constituant à la fois un isolant électrique très collant et mécaniquement résistant après séchage ou polymérisation, connu souvent sous la dénomination de "compound" et qui présente de plus si possible une assez bonne conductibilité thermique afin de favoriser le refroidissement des têtes de bobine. Cet enduit 26 forme avec les têtes des bobines, constituant elles-mêmes une sorte d'armature métallique, et le manchon 11 un bloc annulaire 27 rigide et isolé électriquement. Ce bloc annulaire 27 situé de chaque côté du stator contient les têtes de bobines pour les protéger contre toute agression mécanique, chimique, électrique ou autres et est renforcé extérieurement par le manchon 11 auquel il est adhérisé et qui s'appuie lui radialement sur les bagues isolantes latérales 10. Les deux bagues 10 sont soutenues et entretoisées l'une par rapport à l'autre par les couches d'isolation d'entrefer formant des tubes à section ouverte latéralement et par la carcasse 16 entourant la culasse 17 du circuit magnétique du moteur.

Selon un mode de réalisation représenté à la figure 3, la couche monobloc surmoulée recouvre la totalité de la zone des encoches 2 de l'entrefer, en constituant notamment une couche d'entrefer 12, de manière à encapsuler hermétiquement, le cas échéant, la totalité du circuit magnétique et à le protéger ainsi par exemple de la corrosion. Lorsque le moteur électrique comporte un tube d'entrefer mince 13 en un matériau non magnétique tel que de l'acier inoxydable, il est ainsi possible de venir appuyer ce tube d'entrefer 13 directement au contact de la couche d'entrefer 12 qui l'isole physiquement (notamment thermiquement) et électriquement du circuit magnétique relativement conducteur de la chaleur et de l'électricité. Le rotor 14 du moteur électrique qui porte les barres 15 du circuit de rotor à cage d'écureuil est nettement séparé par l'entrefer proprement dit 13a du tube d'entrefer 13, afin d'éviter au cours de la rotation tout contact avec le tube d'entrefer relativement fragile parce que mince.

Selon une variante de réalisation représentée en coupe à la partie supérieure des figures 1 et 4, la couche monobloc surmoulée 8 entoure non seulement la zone des encoches 2 mais forme une carcasse 16 entourant au moins partiellement la culasse 17 (voir la figure 3) du circuit magnétique. Sur la carcasse 16 surmoulée sur la culasse 17, est formée monobloc la partie inférieure 18 d'une boîte à bornes 19 fermée par un couvercle 20. Les contacts électriques avec les bobines 4 et 5 du moteur électrique peuvent être établis à travers le manchon 11 (voir le passage 23 à la figure 1) qui sert alors d'isolant et de support pour les fils de phase amenés aux bobinages à travers le manchon 11.

Comme on l'a déjà signalé pour le manchon 11 et le bobinage électrique, la couche isolante monobloc surmoulée 8,10,11 peut être incluse dans un compoundage général des bobinages et du circuit magnétique stator formant, après mise en place du bobinage, un ensemble rigide et bien isolé électriquement et dont les fils conducteurs ne risquent pas de se déplacer les uns par rapport aux autres et par rapport au circuit magnétique.

## Revendications

1. Stator de moteur électrique à induction comportant un paquet de tôles magnétiques empilées (1a), muni d'encoches (2) ouvertes latéralement et destinées à recevoir les parties actives sensiblement rectilignes (3) des spires (4, 5) du bobinage des pôles du moteur, la surface intérieure des encoches (2) étant recouverte d'une couche (8) en matériau électriquement isolant surmoulée monobloc sur la surface intérieure d'isolation des encoches (2) et sur les autres surfaces du circuit magnétique de stator, à l'exception, le cas échéant, de la zone d'entrefer (12) et des pieds de dent (ligne 9) pour assurer l'isolation à la masse de la zone des encoches et la cohésion du paquet de tôles (1), la couche monobloc surmoulée (8, 10) comportant sur chaque face d'extrémité (21, 22) du stator un manchon cylindrique allongé (11) en saillie axiale vers l'extérieur et concentrique à l'entrefer, caractérisé en ce que la couche monobloc surmoulée présente une épaisseur nettement plus faible dans la zone (8) de la surface intérieure des encoches (2) et, le cas échéant, de l'entrefer que dans la zone (10) des faces d'extrémité (21, 22) du stator où elle sert de support radial rigide, nervuré le cas échéant, du manchon (11) disposé à l'extérieur des têtes de bobines et de plus forte épaisseur que ladite zone (8) des encoches et en ce que les têtes ou chignons (4a, 5a) des bobines (4a, 5a) sont logées à l'intérieur du manchon correspondant (11) prévu à chaque extrémité (21, 22) du stator et sont reliées rigidement à ce manchon (11) par un moyen d'enrobage résistant mécaniquement, par exemple par cuisson ou polymérisation d'un enduit collant (26), pour former, de chaque côté du stator, un bloc annulaire (27) rigide et isolé électriquement, qui contient les têtes des bobines (4, 5) constituant elles-mêmes une sorte d'armature métallique pour l'ensemble en matériau électriquement isolant surmoulé, de manière à simultanément protéger mécaniquement les têtes de bobines par le manchon (11) de chaque côté (20, 21) du stator et à renforcer la rigidité mécanique d'ensemble de la couche isolante (8) de faible épaisseur à l'intérieur des encoches (2).

2. Stator de moteur électrique selon la revendication 1, caractérisé en ce que la couche monobloc surmoulée (8, 10) forme une carcasse (16) qui entoure au moins partiellement la culasse (17) du circuit magnétique sur laquelle elle est surmoulée et qui porte de façon monobloc la partie inférieure (18) d'au moins une boîte à bornes électrique (19).

3. Application du stator de moteur électrique selon la revendication 1 ou 2, à un moteur à rotor (14) isolé de façon étanche du stator par un tube d'entrefer (13) en un matériau non magnétique et dans lequel la couche monobloc surmoulée (8, 10) recouvre, à chaque extrémité (21, 22) du stator, la totalité de la section magnétique d'encoche (en 8) et la zone d'entrefer du stator (en 12), de manière à encapsuler complètement la zone des encoches (2) et de l'entrefer (13a) du circuit magnétique du stator, caractérisé en ce que le tube d'entrefer (13) isolant de façon étanche le rotor (14) du moteur vis-à-vis de l'extérieur est appuyé directement au contact de la couche isolante d'entrefer (12) faisant partie de ladite couche monobloc surmoulée (8, 10) et qui isole physiquement et électriquement ledit tube (13) du contact avec les tôles (1a) du circuit magnétique.

## Claims

1. Magnetic circuit for the stator of an electric induction motor comprising a packet of stacked laminations (1a) provided with laterally open slots (2) adapted to receive the substantially rectilinear active portions (3) of the turns (4, 5) of the winding for the poles of the motor, the inner surface of each slot (2) being covered by a layer (8) of an electrically insulating material integrally molded onto the inner insulation surface of the slots (2) and onto the other surfaces of the magnetic circuit of the stator, with the possible exception of the region of the air gap (12) and the feet of the inter-slot region (line 9) , ensuring ground insulation of the slot region and cohesion of the packet of laminations (1), the molded one-piece layer (8, 10) including, on each outer end (21, 22) of the stator, an elongated cylindrical sleeve (11) projecting outwardly in the axial direction and concentric with the air-gap characterized in that the one-piece molded layer has a distinctly smaller thickness in the region (8) of the inside surface of the slots (2) and, if appropriate, the air-gap, than in the region (10) of the outer ends (21, 22) of the stator where it acts as an optionally ribbed rigid radial support for said sleeve (11) disposed externally of the free end of the windings and thicker than said slot region (8) and in that the winding free ends or overhang (4a, 5a) are housed inside the corresponding outer sleeve (11) provided at each end (21, 22) of the stator and are rigidly united with this sleeve (11) by a mechanically resistant embedding means, obtained for example by heat-curing or polymerizing an adhesive coating material (26) , in order to form at each side of the stator, an electrically insulating rigid annular block (27) containing said winding free ends or overhang which themselves form a sort of metallic reinforcing for the molded elelctrically-insulating block, providing simultaneous mechanical protection of the winding ends by said sleeve (11) at each side (20, 21) of the stator, and reinforcing the overall mechanical rigidity of the reduced thickness insulating layer (8) inside the the slots (2).

2. Magnetic circuit according to claim 1, characterized in that the one-piece molded layer (8, 10) forms an outer casing (16) which at least partially surrounds the magnetic circuit yoke (17) over which it is molded and which carries the lower portion (18) of at least one electrical terminal box (19).

3. Magnetic circuit in accordance with one of claims 1 or 2, applied to a motor having the rotor (14) thereof separated by an air-gap tube (14) and in which the one-piece molded layer (8, 10) covers, at each end (21, 22) of the stator, the whole of the slot magnetic section (at 8) and the air-gap region (at 12) of the stator so as to completely encapsulate the slot region (2) and the air-gap region (13a) of the stator magnetic circuit, characterized in that the air-gap tube (13) that sealingly separates the rotor (14) of the motor with respect to the outside thereof is placed directly against an air-gap insulating layer (12) that constitutes a part of said one-piece molded layer and which physically and electrically insulates said tube (13) from contact with the laminations (1a) of the magnetic circuit.

## Patentansprüche

1. Stator eines elektrischen Induktionsmotors mit einem Paket aufeinander geschichteter Magnetbleche (1 a), versehen mit seitlich offenen und zur Aufnahme der aktiven im wesentlichen geradlinigen Teile (3) der Windungen (4, 5) der Polspulen des Motors bestimmten Einschnitten (2), deren innere Oberfläche mit einer einstückig auf die innere Isolationsoberfläche der Einschnitte (2) und auf die anderen Oberflächen des magnetischen Kreises des Stators mit Ausnahme gegebenenfalls der Zone des Luftspalts (12) und der Zahnfüße (Linie 9) geformten Schicht (8) aus einem elektrisch isolierenden Material zur Gewährleistung der Isolierung der Zone der Einschnitte insgesamt und des Zusammenhalts des Blechpakets (1) bedeckt ist, wobei die einstückig aufgegossene Schicht (8, 10) auf jeder Endfläche (21, 22) des Stators eine zylindrische langgestreckte nach außen axial vorspringende und zum Luftspalt konzentrische Hülse (11) aufweist, dadurch gekennzeichnet, daß die einstückig angegossene Schicht eine deutlich geringere Dicke in der Zone (8) der inneren Oberfläche der Einschnitte (2) und gegebenenfalls des Luftspalts als in der Zone (10) der Endflächen (21, 22) des Stators aufweist, wo sie als radiale starre gegebenenfalls mit Rippen versehene Halterung für die außerhalb der Spulenköpfe angeordnete Hülse (11) dient und eine größere Dicke als in der Zone (8) der Einschnitte aufweist, und daß die Köpfe oder Schaltenden (4 a, 5 a) der Spulen (4 a, 5 a) im Inneren der entsprechenden an jedem Ende (21, 22) des Stators vorgesehenen Hülse (11) angeordnet und starr mit dieser Hülse (11) durch ein mechanisch widerstehendes Verkleidungsmittel verbunden sind, beispielsweise durch das Aushärten oder Polymerisieren eines klebenden Überzugs (26), um auf jeder Seite des Stators einen ringförmigen starren und elektrisch isolierten Block (27) zu bilden, der die Köpfe der Spulen (4, 5) enthält, die ihrerseits eine Art metallischer Bewehrung für die Gesamtheit aus dem gegossenen elektrisch isolierenden Material bilden, in einer Weise, um gleichzeitig mechanisch.die Spulenköpfe durch die Hülse (11) auf jeder Seite (20, 21) das Stators zu schützen und die mechanische Starrheit der Gesamtheit der isolierenden Schicht (8) mit geringer Dicke im Innern der Einschnitte (2) zu verstärken.

2. Stator eines Elektromotors nach Anspruch 1, dadurch gekennzeichnet, daß die einstückig gegossene Schicht (8, 10) einen Jochring (16) bildet, die mindestens teilweise das Joch (17) des magnetischen Kreises umgibt, auf das sie aufgegossen ist und das in einstückiger Weise den unteren Teil (18) mindestens eines elektrischen Klemmenkastens (19) trägt.

3. Anwendung des Stators eines Elektromotors nach Anspruch 1 oder 2 auf einen Motor (14), dessen Rotor in dichter Weise von dem Stator durch ein Luftspaltrohr (13) aus einem nicht magnetischen Material isoliert ist und bei dem die einstückig aufgegossene Schicht (8, 10) an jedem Ende (21, 22) des Stators die Gesamtheit des magnetischen Querschnitts des Einschnitts (bei 8) und der Luftspaltzone des Stators (bei 12) bedeckt, so daß die Zone der Einschnitte (2) und des Luftspalts (13 a) des magnetischen Kreises des Stators vollständig eingekapselt werden, dadurch gekennzeichnet, daß das den Rotor (14) des Motors gegenüber dem Äußeren dicht isolierende Luftspaltrohr (13) direkt in Berührung auf die isolierende Luftspaltschicht (12) aufgestützt wird, die einen Teil der einstückig angeformten Schicht (8, 10) bildet und die körperlich und elektrisch das Rohr (13) von der Berührung mit den Blechen (1 a) des magnetischen Kreises isoliert.
